# EUROPÄISCHE PATENTANMELDUNG

(11) **EP 2 295 200 A1**
(43) Veröffentlichungstag der Anmeldung: **16.03.2011**
(21) Anmeldenummer: 09169933.0
(22) Anmeldetag: 10.09.2009
(51) Int. Cl.: B23Q 5/04

(54) **Werkzeugkopf zur Verwendung in einer mehrachsigen Maschine, mehrachsige Maschine mit einem solchen Werkzeugkopf und Verwendung einer solchen Maschine**

(71) Anmelder: Klingelnberg AG, 8023 Zürich (CH)
(72) Erfinder: Von der Mark, Bernd, 42477 Radevormwald (DE); Brieden, Christian, 42499 Hückeswagen (DE)
(74) Vertreter: OK pat AG

(57) **Zusammenfassung**

Werkzeugkopf (110) zur Verwendung in einer mehrachsigen Maschine (100), wobei der Werkzeugkopf (110) einen Spindelkörper umfasst, der zwei Elemente (101, 102) aufweist. Diese Elemente (101, 102) sind über eine korrespondierene Kopplung (103) drehbar miteinander verbunden sind, wobei das erste Element (101) eine erste Längsachse (WA1) und das zweite Element (102) eine zweite Längsachse (WA2) aufweisen, die je nach Drehstellung von einer gestreckten Lage in eine abgewinkelte Lage überführbar sind. Ein erster Antrieb (A1) sitzt in oder an dem Spindelkörper. Es ist ein Aufnahmevorrichtung (120) vorgesehen, die an dem zweiten Element (102) angeordnet ist. Diese Aufnahmevorrichtung (120) dient zum Befestigen einer Motorspindel (20), wobei ein Motor (M1), der in die Motorspindel (20) integriert ist, über das zweite Element (102) und über elektrische Anschlussmittel der Aufnahmevorrichtung (120) mit Strom versorgbar ist. Die Aufnahmevorrichtung (120) dient auch zum Befestigen eines Fräswerkzeugs (30), das mittels des ersten Antriebs (A1) antreibbar ist.

## Beschreibung

### Gebiet der Erfindung

Gegenstand der Erfindung ist ein Werkzeugkopf zur Verwendung in einer mehrachsigen Maschine, eine mehrachsige Maschine mit einem solchen Werkzeugkopf und die Verwendung einer solchen Maschine.

### Hintergrund der Erfindung, Stand der Technik

Es gibt eine ganze Reihe von Spezialmaschinen, die für die Bearbeitung von verschiedensten Materialien und Werkstücken ausgelegt und optimiert sind. Häufig sind die Kosten solcher Spezialmaschinen relativ hoch. Es wird teilweise als ein Nachteil dieser Spezialmachinen angesehen, dass ihre Auslastung nur dann gewährleistet werden kann, wenn grosse Stückzahlen an identischen oder ähnlichen Werkstücken zu bearbeiten sind.

Es gibt vermehrt einen Bedarf die Auslastung der entsprechenden Maschinen dadurch zu verbessern, die Maschinen durch An- oder Umbauten flexibler einsetzbar zu machen. Dabei kann es dazu kommen, dass die An- oder Umbauten den eigentlichen Einsatz der Maschine im urspünglichen Spezialgebiet behindern, oder dass die Zuverlässigkeit oder Genauigkeit der Maschine beeinträchtigt wird.

Aufgabe der vorliegenden Erfindung ist daher eine Bearbeitungsmachine so auszulegen, dass sie einerseits zum Beispiel als Verzahnungmaschine für das Fertigen von Kegelrädern einsetzbar ist, dass sie aber auch für andere Bearbeitungverfahren oder Situationen eingesetzt werden kann.

Aufgabe der vorliegenden Erfindung ist es auch einen Werkzeugkopf bereitzustellen, der als Teil einer Bearbeitungsmaschine flexibel und universell einsetzbar ist.

### Zusammenfassung der Erfindung

Diese Aufgabe wird gemäß der vorliegenden Erfindung durch einen Werkzeugkopf gelöst, der speziell zur Verwendung in einer mehrachsigen Maschine ausgelegt ist. Der Werkzeugkopf umfasst einen Spindelkörper, der zwei Elemente oder Baugruppen aufweist, die über eine korrespondierene Kopplung drehbar miteinander verbunden sind. Die Anordnung ist so, dass das erste Element der beiden Elemente eine erste Längsachse und das zweite Element der beiden Elemente eine zweite Längsachse aufweisen, die je nach Drehstellung von einer konzentrischen (gestreckten) Lage in eine abgewinkelte Lage überführbar sind. In oder an dem Spindelkörper sitzt ein erster (Haupt-)Antrieb. Es ist eine Aufnahmevorrichtung vorgesehen, die an dem zweiten Element angeordnet ist. Diese Aufnahmevorrichtung ist zum temporären Befestigen einer Motorspindel ausgelegt ist, wobei ein Motor, der in die Motorspindel integriert ist, über das zweite Element und Anschlussmittel (z.B. elektrische Anschlussmittel) der Aufnahmevorrichtung mit Energie (z.B. elektrischer Energie in Form von Strom) versorgbar ist. Ausserdem ist die Aufnahmevorrichtung zum temporären Befestigen eines Fräswerkzeugs ausgelegt, wobei das Fräswerkzeug mittels des ersten Antriebs antreibbar ist.

Die erfindungsgemässen Vorrichtungen sind speziell für das Fertigen von Zahnrädern und/oder die Bearbeitung von Zahnflanken ausgelegt. Entsprechend sind die Werkzeuge auszuwählen, die zum Einsatz kommen.

Der wichtigste Vorteil der Erfindung wird darin gesehen, dass eine entsprechend mit dem erfindungsgemässen Werkzeugkopf ausgestattete Spezialmaschine flexibler einsetzbar ist. Trotz der entsprechenden baulichen Änderungen der Maschine werden die Genauigkeitseigenschaften nicht negativ beeinträchtigt.

### ZEICHNUNGEN

Weitere Einzelheiten und Vorteile der Erfindung werden im Folgenden anhand von Ausführungsbeispielen und mit Bezug auf die Zeichnung beschrieben. Es zeigen:
- **FIG. 1A**: eine schematische Seitenansicht eines ersten erfindungsgemässen Werkzeugkopfes in einer gestreckten Stellung;
- **FIG. 1B**: eine schematische Seitenansicht des ersten erfindungsgemässen Werkzeugkopfes nach Fig. 1A in einer abgewinkelten Stellung;
- **FIG. 2**: eine schematische Perspektivansicht eines weiteren erfindungsgemässen Werkzeugkopfes in einer gestreckten Stellung;
- **FIG. 3A**: eine schematische Seitenansicht einer erfindungsgemässen Maschine mit Werkzeugkopf in einer gestreckten Stellung, wobei der Werkzeugkopf eine Motorspindel mit Fräser trägt;
- **FIG. 3B**: eine schematische Seitenansicht der erfindungsgemässen Maschine mit Werkzeugkopf nach Fig. 3A in einer abgewinkelten Stellung, wobei der Werkzeugkopf eine Motorspindel mit Fräser trägt;
- **FIG. 3C**: eine schematische Seitenansicht einer Motorspindel mit Fräser;
- **FIG. 4A**: eine schematische Seitenansicht einer erfindungsgemässen Maschine mit Werkzeugkopf in einer gestreckten Stellung, wobei der Werkzeugkopf ein Fräswerkzeug trägt;
- **FIG. 4B**: eine schematische Seitenansicht der erfindungsgemässen Maschine mit Werkzeugkopf nach Fig. 4A in einer abgewinkelten Stellung, wobei der Werkzeugkopf ein Fräswerkzeug trägt;

- **FIG. 4C**: eine schematische Seitenansicht eines Fräswerkzeugs;
- **FIG. 5**: eine schematische Seitenansicht einer weiteren erfindungsgemässen Maschine mit Werkzeugkopf in einer abgewinkelten Stellung;
- **FIG. 6**: eine schematische Seitenansicht einer weiteren erfindungsgemässen Maschine mit Werkzeugkopf in einer gestreckten Stellung, wobei der Werkzeugkopf eine Motorspindel mit Fräser trägt;
- **FIG. 7**: eine schematische Seitenansicht einer weiteren erfindungsgemässen Maschine mit Werkzeugkopf in einer gestreckten Stellung, wobei der Werkzeugkopf eine Motorspindel mit Fräser trägt;
- **FIG. 8A**: eine Schnittansicht eines weiteren erfindungsgemässen Werkzeugkopfs in einer abgewinkelten Stellung, wobei der Werkzeugkopf ein Fräswerkzeug trägt;
- **FIG. 8B**: eine Schnittansicht des Werkzeugkopfs nach Fig. 8A in einer abgewinkelten Stellung, wobei der Werkzeugkopf eine Motorspindel mit Fräser trägt;
- **FIG. 9**: eine Schnittansicht eines weiteren erfindungsgemässen Werkzeugkopfs in einer abgewinkelten Stellung, wobei der Werkzeugkopf einen Flansch trägt;
- **FIG. 10A**: eine Schnittansicht eines weiteren erfindungsgemässen Werkzeugkopfs, wobei der Werkzeugkopf ein Fräswerkzeug trägt;
- **FIG. 10B**: eine Schnittansicht des Werkzeugkopfs nach Fig. 10A, wobei der Werkzeugkopf eine Motorspindel trägt;
- **FIG. 10C**: eine Schnittansicht des Werkzeugkopfs nach Fig. 10A, wobei der Werkzeugkopf einen Flansch trägt.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

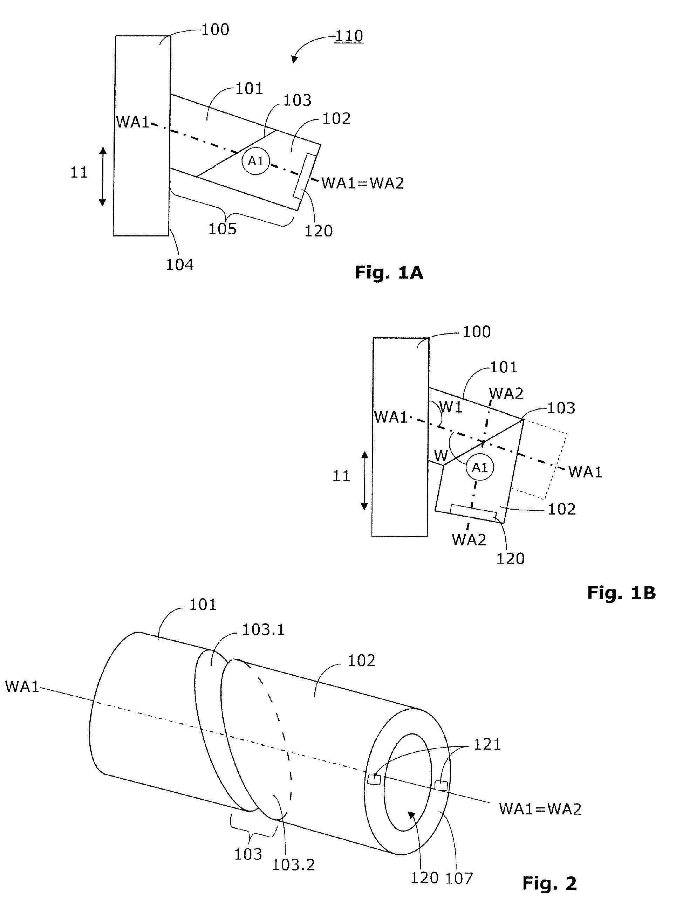

Gemäss Erfindung geht es um einen neuartigen Werkzeugkopf 110, der in den Figuren 1A und 1B in zwei Extremstellungen gezeigt ist. Der Werkzeugkopf 110 ist speziell zur Verwendung in einer mehrachsigen Maschine 100 ausgelegt. Die Maschine 100, bei der es sich vorzugsweise um eine mehrachsige, NC-gesteuerte Maschine handelt, ist in den Figuren 1A bis 9 nur als Blockelement gezeigt.

Der Werkzeugkopf 110 umfasst einen Spindelkörper 105, der zwei Elemente oder Baugruppen 101, 102 aufweist, wie in den Figuren 1A und 1B schematisch angedeutet. Die beiden Elemente 101 und 102 sind über eine korrespondierene Kopplung 103 drehbar miteinander verbunden. Das erste Element 101 weist eine erste Längsachse WA1 auf (auch erste Werkzeugachse genannt) und das zweite Element 102 weist eine zweite Längsachse WA2 auf (auch zweite Werkzeugachse genannt). Die beiden Elemente 101, 102 sind durch die Kopplung 103 so mechanisch miteinander verbunden, dass sie je nach Drehstellung von einer konzentrischen Lage (auch gestreckte Lage genannt) in eine abgewinkelte Lage überführbar sind. Die gestreckte Lage, bei der die Längsachsen WA1 und WA2 konzentrisch zueinander liegen, ist in Fig. 1A gezeigt. Die abgewinkelte Lage, bei der die Längsachse WA1 zur Längsachse WA2 angewinkelt ist, ist in Fig. 1B gezeigt. Der Winkel W zwischen den beiden Längsachsen WA1, WA2 beträgt hier im gezeigten Beispiel etwas mehr als 90 Grad.

Der Werkzeugkopf 110 umfasst weiterhin einen ersten Antrieb A1 (auch Hauptantrieb genannt), der in oder an dem Spindelkörper 105 sitzt. Der ersten Antrieb A1 treibt die sogenannte Hauptachse an. Vorzugsweise sitzt dieser erste Antrieb A1 im zweiten Element 102, wie in den Figuren 1A, 1B, 3A, 3B, 4A, 4B, 8A, 8B und 9 gezeigt.

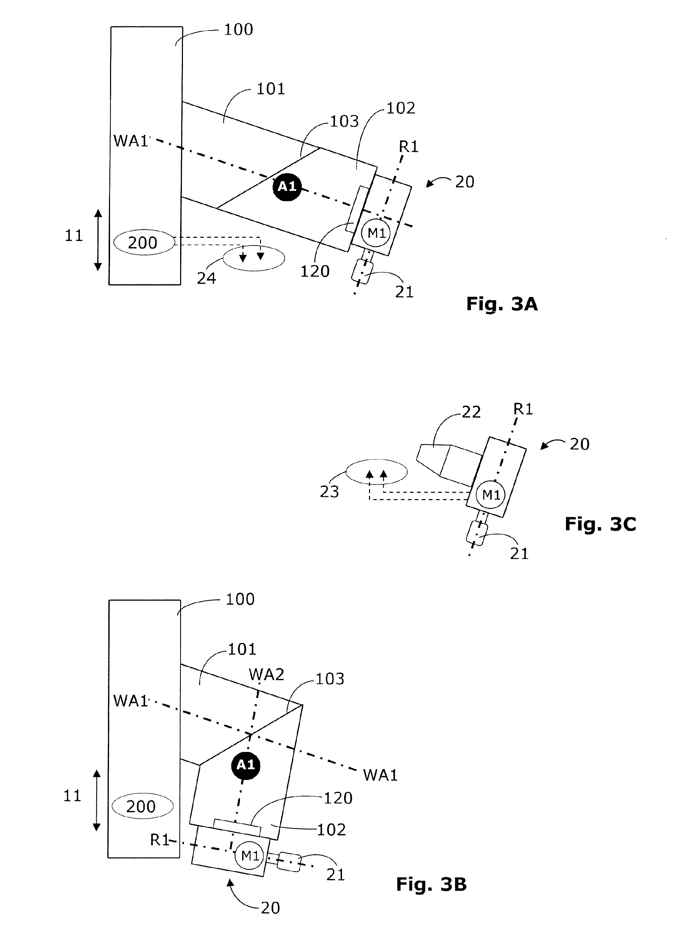

Zusätzlich ist eine Aufnahmevorrichtung 120 (z.B. eine Spannvorrichtung) vorgesehen, die an dem zweiten Element 102 angeordnet ist. Die Aufnahmevorrichtung 120 ist in den Figuren in rein schematischer Form gezeigt. Sie ist zum mechanischen Befestigen einer Motorspindel 20, wie in Fig. 3A und 3B gezeigt, ausgelegt. Es ist ein Motor M1 in diese Motorspindel 20 integriert, um ein Werkzeug 21 (z.B. einen Fräser 21) in eine Rotationsbewegung um eine sogenannte Zusatzachse R1 zu versetzen. Der Motor M1 der Motorspindel 20 ist über das zweite Element 102 und über Anschlussmittel (z.B. elektrische Anschlussmittel) der Aufnahmevorrichtung 120 mit Energie (z.B. mit (z.B. elektrischer Energie) versorgbar und/oder von einer NC-Steuerung 200 ansteuerbar. Der Antrieb A1 hat gemäss Erfindung zwei Betriebsarten:

1. Der Antrieb A1 dient als Antrieb eines Werkzeuges, z.B. eines Stirnmesserkopfes 30 zum Kegelradfräsen. Hierbei wird mit hohem Drehmoment, relativ "geringen" Drehzahlen und geringer Dynamik (Drehzahl und Drehrichtungsänderung gearbeitet.

2. Der Antrieb A1 dient als Positionierantrieb (analog zu einer "normalen" CNC-Achse) z.B. um die Motorspindel 20 zu bewegen. Dies geschieht mit hoher Dynamik.

Der Antrieb A1 ist in den Figuren 3A und 3B invertiert dargestellt (weisse Schrift auf schwarzem Grund), um grafisch anzudeuten, dass dieser Antrieb A1 in den gezeigten Situationen nicht zum Antreiben eines Werkzeugs (z.B. des Werkzeugs 30) zum Einsatz kommt, sondern dass der Antrieb A1 als Positionierantrieb dient.

Die Aufnahmevorrichtung 120 ist weiterhin so ausgelegt, dass alternativ auch ein Fräswerkzeug 30 (vorzugsweise ein Messerkopf) mechanisch befestigt werden kann. Dieses Fräswerkzeug 30 ist mittels des ersten Antriebs A1 antreibbar. D.h., die Aufnahmevorrichtung 120 sorgt nicht nur für eine feste mechanische Verbindung zum Fräswerkzeug 30, sondern sie ermöglicht auch die antriebstechnische Kopplung des Fräswerkzeugs 30 mit dem ersten Antrieb A1.

Der neuartige Werkzeugkopf 110 ist in Fig. 1A in der konzentrischen Lage (erste Extremstellung) und in Fig. 1B in der abgewinkelten Lage (zweite Extremstellung) gezeigt. Zwischen diesen beiden Stellungen gibt es zahlreiche Zwischenstellungen, die durch ein Verdrehen/Schwenken des Elements 102 gegenüber dem Element 101 erzeugt werden. In den beiden Extremstellungen liegen die Werkzeugachsen WA1 und WA2 in einer gemeinsamen Ebene. Diese gemeinsame Ebene entspricht bei den Figuren 1A und 1B der Zeichenebene. In den Zwischenstellungen hingegen wird die Werkzeugachse WA2 aus der Ebene herausbewegt.

Besonders bevorzugt ist eine Maschine 100, bei welcher die Werkzeugachse WA1 leicht nach unten geneigt an einer Vertikalfläche 104 der Maschine 100 (siehe Fig. 1A) oder an einer anders orientierten Seitenfläche der Maschine 100 sitzt. Der Neigungswinkel W1 (siehe Fig. 1B )beträgt hier vorzugsweise zwischen 91 und 135 Grad.

Die Kopplung 103 ist vorzugsweise in Form einer kardangelenkartigen Verbindung ausgelegt, um das (stufenlose) Verdehen und Verstellen des Elements 102 gegenüber dem Element 101 zu ermöglichen.

Besonders bevorzugt ist ein Werkzeugkopf 110 dessen Kopplung 103 mittles zweier Schrägflächen 103.1, 103.2 realisiert ist, die stufenlos gegeneinander verdrehbar sind. In Fig. 2 ist das grundlegende Prinzip einer solchen Kopplung 103 in perspektivischer Ansicht gezeigt. Das erste Element 101 hat in diesem Ausführungsbeispiel einen runden Querschnitt (im Stirnschnitt) und eine schräg stehende Endfläche (Schrägfläche) 103.1. Diese Schrägfläche 103.1 ist in diesem Ausführungsbeispiel oval. Das zweite Element 102 hat auch einen runden Querschnitt (im Stirnschnitt) und eine schräg stehende Endfläche (Schrägfläche) 103.2. Auch diese Schrägfläche 103.2 ist oval. In Fig. 2 sind die beiden Elemente 101, 102 in der konzentrischen (gestreckten) Lage gezeigt und die Werkzeugachse WA2 fällt mit der Werkzeugachse WA1 zusammen (es gilt daher WA1 = WA2).

Wenn man in Fig. 2 nun das Element 102 gegenüber dem Element 101 verdreht bis man die andere Extremlage erreicht, dann würde die Werkzeugachse WA2 schräg nach oben zeigen.

In Fig. 2 ist weiterhin angedeutet, dass zum Beispiel ein Spindelsitz in Form einer konzentrischen (zylindrischen oder konisch zulaufenden) Aufnahmeöffnung als Aufnahmevorrichtung 120 dienen kann. Dass Öffnen und Schliessen der Aufnahmevorrichtung 120 kann manuell, elektrisch, pneumatisch oder hydraulisch erfolgen. Die Details solcher Aufnahmevorrichtungen 120 sind hinlänglich bekannt und werden daher hier nicht weiter beschrieben. Besonders geeignet sind Spannvorrichtungen, die aus dem Bereich der Verzahnungsmaschinen bekannt sind.

An der Aufnahmevorrichtung 120 oder im Bereich der Aufnahmevorrichtung 120 können Anschlussmittel 121 angeordnet sein, über die eine Steuerverbindung zu einer NC-Steuerung 200 der Maschine 100 herstellbar ist, oder die zur Stromversorgung des Motors M1 dienen. In Fig. 2 ist schematisch angedeutet, dass zum Beispiel zwei Kontaktflächen auf der Stirnseite 107 des zweiten Elements 102 angebracht sein können. Beim Befestigen der Motorspindel 20 bilden Kontaktstifte oder -elemente (z.B. die Stromanschlüsse 23 in Fig. 3C) der Motorspindel 20 mit diesen Kontaktflächen 121 eine elektrisch leitende Verbindung. Je nach Ausführungsform können im Bereich der Aufnahmevorrichtung 120 auch pneumatische und/oder hydraulische Anschlussmittel vorgesehen sein.

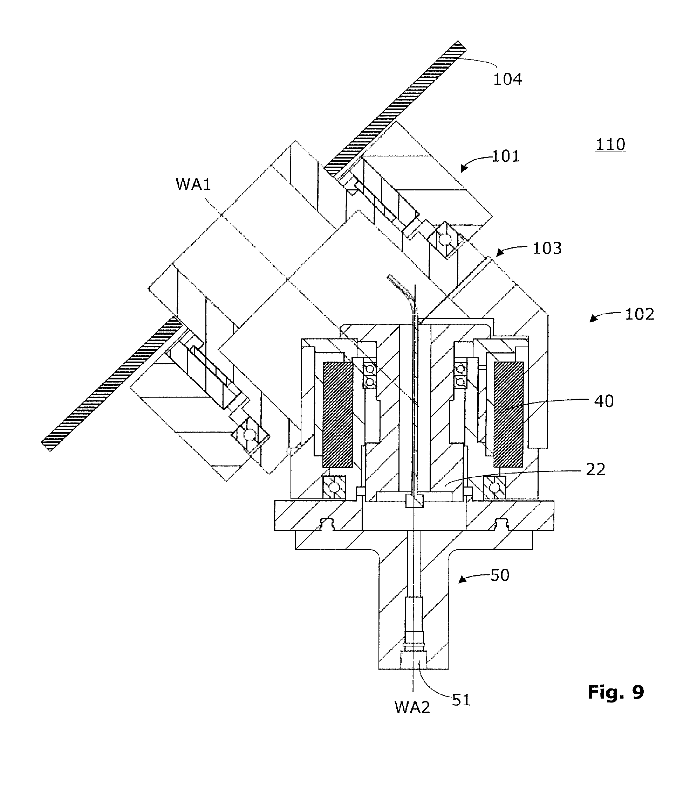

Die Aufnahmevorrichtung 120 ist also bei allen Ausführungsformen so ausgelegt, dass sie entweder die Motorspindel 20 (z.B. mit einem Fräser 21 bestückt) oder das Fräswerkzeug 30 aufnehmen und mechanisch fixieren kann. Die Aufnahmevorrichtung 120 kann z.B. auch einen Flansch 50 nach Fig. 9 aufnehmen. Falls die selbstantreibbare Motorspindel 20 eingesetzt wird, dann muss die Aufnahmevorrichtung 120 auch für eine elektrische und/oder pneumatische und/oder hydraulische Verbindung des Motors M1 mit der Machine 100 sorgen. Zu diesem Zweck sind die (elektrischen) Anschlussmittel 121 vorgesehen. Die (elektrischen) Anschlussmittel 121 sind so ausgelegt, dass beim Befestigen der Motorspindel 20 am zweiten Element 102 z.B. eine elektrisch leitende Verbindung manuell oder automatisch hergestellt wird. Das manuelle Verbinden kann zum Beispiel durch das Zusammenbringen von Steckkontakten erfolgen. Eine automatisch Verbindung kann zum Beispiel mit Kontaktstiften -oder elementen und entsprechenden Kontaktflächen 121 realisiert werden.

Wenn das Fräswerkzeug 30 eingesetzt wird, dann muss die Aufnahmevorrichtung 120 für eine antriebstechnische Verbindung des Antriebs A1 mit dem Fräswerkzeug 30 sorgen. Die antriebstechnische Verbindung kann mechanisch (zum Beispiel unter Einsatz einer Welle oder eines Getriebes) erfolgen. Es ist aber auch möglich eine hydraulische oder pneumatische antriebstechnische Verbindung vorzusehen.

In den Figuren 3A und 3B ist ein entsprechender Werkzeugkopf 110 in der Bestückung mit der selbstantreibbaren Motorspindel 20 gezeigt. Die selbstantreibbare Motorspindel 20 wird mit einer Welle 22 in eine Aufnahmeöffnung der Aufnahmevorrichtung 120 eingesetzt und dort mit einer Spannvorrichtung festgespannt. Die besagte Welle 22 verläuft im eingespannten Zustand koaxial zur Werkzeugachse WA2. Details einer selbstantreibbaren Motorspindel 20 sind in Fig. 3C angedeutet. Die Stromanschlüsse 23 des Motors M1 sind in Fig. 3C durch zwei gestrichelte Pfeile dargestellt. Die korrespondierenden maschinenseitigen Stromanschlüsse 23 sind in Fig. 3A durch zwei gestrichelte Pfeile dargestellt. Statt der Stromanschlüsse 23 können auch hydraulische und/oder pneumatische Anschlüsse zum Einsatz kommen.

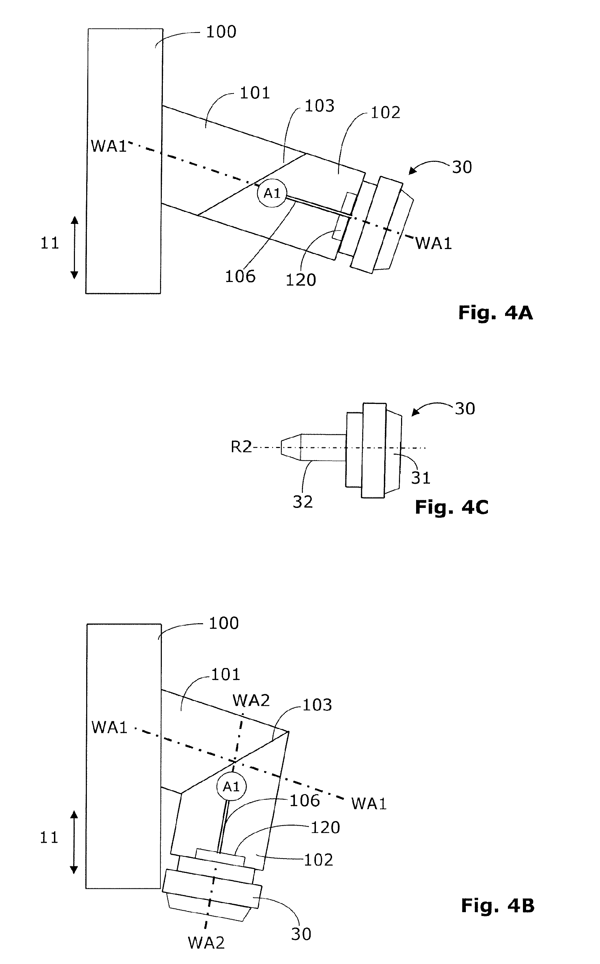

In den Figuren 4A und 4B ist ein entsprechender Werkzeugkopf 110 in der Bestückung mit einem maschinenseitig angetriebenen Fräswerkzeug 30 (hier in Form eines Messerkopfes) gezeigt. Das Fräswerkzeug 30 wird mit einer Spindel oder Welle 32 in eine Aufnahmeöffnung der Aufnahmevorrichtung 120 eingesetzt und dort mit einer Spannvorrichtung festgespannt. Die besagte Welle 32 verläuft im eingespannten Zustand koaxial zur Werkzeugachse WA2. Details eines Fräswerkzeugs 30 in Form eines Messerkopfes sind in Fig. 4C angedeutet. Stromanschlüsse braucht es hier keine, da das Fräswerkzeug 30 direkt von dem Antrieb A1 angetrieben wird. Die entsprechende antriebstechnische Verbindung 106 ist in den Figuren 4A und 4B durch eine Doppellinie angedeutet, die sich zwischen dem Antrieb A1 und dem Fräswerkzeug 30 erstreckt.

In Fig. 4A ist die Konstellation in gestreckter Anordung und in Fig. 4B in abgewinkelter Anordnung gezeigt. Die Werkzeug- oder Bearbeitungsseite ist in Fig. 4C mit 31 bezeichnet. Hier können sich zum Beispiel Schneidkanten oder Schleifflächen befinden, oder es können hier auf der Stirnseite des Fräswerkzeugs 30 Stabmesser eingesetzt werden.

Als Maschine 100 kommt vorzugsweise eine NC-gesteuerte Mehrachsmaschine zum Einsatz. Die Steuerung 200 der Maschine 100 und die Konstallation der Werkzeugachsen ermöglichen eine grosse Flexibilität was die Verstellbarkeit der Achsen und Einsetzbarkeit der Werkzeuge 20, 30 anbelangt. Die Elemente 101, 102 können zum Beispiel durch Verstellbewegungen 11 einer oder mehrerer Schlitten oder Schieber horiziontal und/oder vertikal und/oder lateral verstellt werden. Ausserdem kann durch ein Verdrehen des Elements 102 in Bezug auf das Element 101 die Winkelstellung der Achsen WA1 und WA2 zueinander verstellt werden.

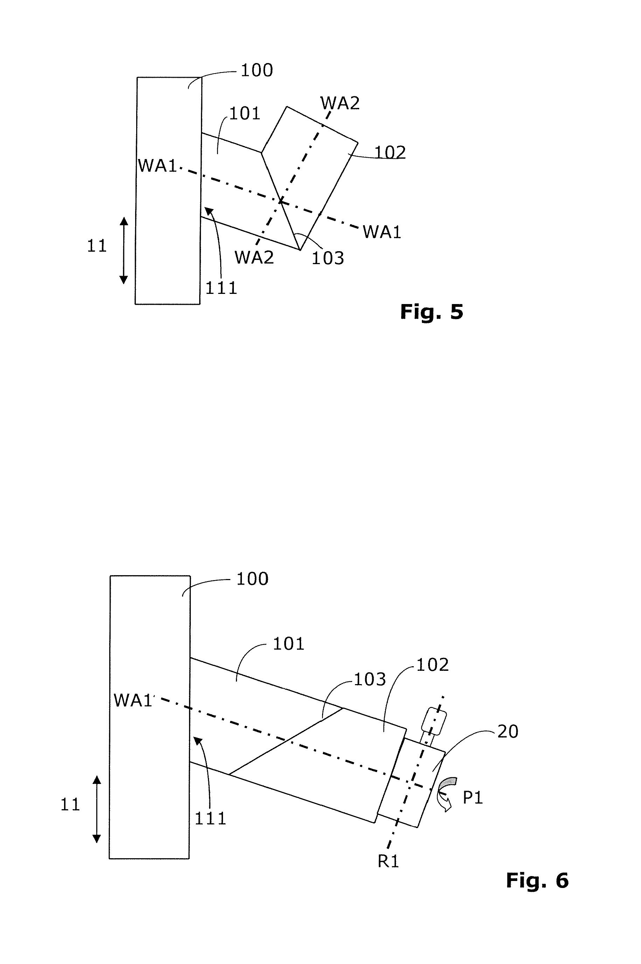

Optional kann die selbstantreibbare Motorspindel 20 um die Welle 22 gedreht werden, wie in Fig. 6 durch den Pfeil P1 angedeutet. Der Antrieb A1 (nicht in Fig. 6 gezeigt) dient in diesem Fall als Positionierantrieb (analog zu einer "normalen" CNC-Achse) um die Motorspindel 20 zu bewegen. Dies geschieht vorzugsweise mit hoher Dynamik.

Schlussendlich vollzieht das Werkzeug 21 (z.B. ein Fingerfräser) eine Rotationsbewegung um die Zusatzachse R1. Das Fräswerkzeug 30 hingegen vollzieht eine Rotationsbewegung um die Werkzeugachse WA2, die koaxial verläuft zur Rotationsachse R2 der Welle 32 (siehe Fig. 4C).

Der Drehmomentanspruch um die Werkzeugachse WA2 in der Bestückung mit der selbstantreibbaren Motorspindel 20 ist geringer als in der direkten Bestückung mit dem Fräswerkzeug 30. Daher reicht im 2. Fall ein geringes Drehmoment als im 1. Fall.

Die selbstantreibbare Motorspindel 20 ist flexibel einsetzbar und kann zum Beispiel zum Nachbearbeiten eines Werkstücks eingesetzt werden. Die Produktivität des Werkzeugs 21 der selbstantreibbaren Motorspindel 20 ist geringer als die des Fräswerkzeugs 30. Wenn hingegen das Fräswerkzeug 30 zum Einsatz kommt, dann kann die Maschine 100 wie eine Verzahnmaschine mit grosser Produktivität eingesetzt werden.

Fräsen bezeichnet hier das spanabhebende Bearbeiten von Metallen. Es kann gemäss Erfindung z.B. ein zylinderförmiger Fräser 21 als Werkzeug (siehe z.B. Fig. 3A) zum Einsatz kommen, der speziell für das spanabhebende Bearbeiten von gehärteten Metallen ausgelegt ist. Es kann sich bei dem Fräser 21 um einen Fräser handeln, der schleifend eingesetzt wird, oder es kann sich um einen Fräser handeln, der Schneidkanten oder -messer aufweist, um Späne abzuheben.

Das Fräswerkzeug 30 hingegen kann zum Beispiel mit einem Stabmessersatz (zum Beispiel als Stirnmesserkopf) bestückt sein. Die einzelnen Stabmesser des Stabmessersatzes haben Schneidkanten, die zum spanabhebenden Bearbeiten eingesetzt werden.

Die zur Spanerzeugung oder -abhebung notwendige Bearbeitungsbewegung wird durch Rotation des Werkzeugs 21 (z.B. gegenüber einer vorgefertigten Zahnflanke) um die Zusatzachse R1 oder durch Rotation des Fräswerkzeugs 30 um die Rotationsachse R2 (=WA2) erzeugt. Die zur Formgebung notwendige Vorschubbewegung wird durch relative Bewegung der Werkzeuge 20 oder 30 in Bezug auf das Werkstück erzeugt. Die entsprechenden Bewegungen können durch die NC-Steuerung 200 einer mehrachsigen Maschine 100 hervorgerufen werden. Es sind auch Drehbearbeitungen denkabr bei denen das Werkzeug fest steht und sich das Werkstück dreht.

Das Werkzeug 21 und/oder das Fräswerkzeug 30 können im Gleichlauf oder im Gegenlauf zu dem Werkstück eingesetzt werden.

Gemäss Erfindung kommt vorzugsweise ein rotatorisch angetriebener, zylinderförmiger Fräser 21 als Teil der selbstantreibbaren Motorspindel 20 zum Einsatz. Als Rotationsachse dient hier die Zusatzsachse R1, wie in den Figuren 3A und 3B gezeigt.

Als Antrieb für den Fräser 21 dient der Motor M1, der in die Motorspindel 20 integriert ist. Es handelt sich daher also um eine autarke, d.h. selbstantreibbare Spindel 20, wie bereits die Bezeichnung Motorspindel zum Ausdruck bringt.

Das Fräswerkzeug 30 wird im Gegensatz dazu als maschinenseitig angetriebenes Werkzeug bezeichnet, da sein Antrieb A1 maschinenseitig im Element 101, 102 oder in der Maschine 100 sitzt.

Zusammenfassend kann gesagt werden, dass eine Werkzeugachse WA2 an einer erfindungsgemässen Maschine 100 einmal als Antriebsspindel mit hohem Drehmomentanspruch und einer Drehrichtung zum Betrieb eines Messerkopfes 30 zum Beispiel zum Fräsen von Kegelrädern und einmal als Stell- und Fahrachse, aber veränderlichen Geschwindigkeiten bzw. Richtungen für eine Zusatzspindel (hier Motorspindel 20 genannt) genutzt wird. Diese Motorspindel 20 trägt das Werkzeug 21 und bildet mit diesem zusammen ein autark antreibbares und flexibel einsetzbares Werkzeug.

Hierbei ist die effektiv wirksame Werkzeugachse "mehrachsig" ausgeführt (d.h. aus mehreren Teilachsen WA1 und WA2 zusammengesetzt) und in Bezug zum Werkstück beweg- oder einstellbar. Die effektiv wirksame Werkzeugachse setzt sich hier aus den beiden Werkzeugachsen WA1 und WA2 zusammen, die in einer speziellen Art und Weise zueinander in Bezug stehen und gegeneinander verstellbar sind. Die Verstellung der Werkzeugachsen WA1, WA2 kann kontinuierlich erfolgen.

Es ist eine entsprechende Steuerung (vorzugsweise eine NC-Steuerung 200) zur Kopplung der Achsbewegungen vorgesehen. Dadurch kann das jeweilige Werkzeug 20, 30 entlang programmierten Bewegungsbahnen geführt werden.

In einer weiteren bevorzugten Ausführungsform ist der gesamte Werkzeugkopf 110 im Übergangsbereich 111 zwischen Werkzeugkopf 110 und Maschine 100 drehbar befestigt. D.h., der Werkzeugkopf 100 kann um die Werkzeugachse WA1 gegenüber der Maschine 100 verdreht werden. Damit sind z.B. auch Positionen einstellbar, bei denen das zweite Element 102 nach oben weist, wie in Fig. 5 angedeutet.

Durch ein solches Drehen im Bereich 111 kann man, wie in Fig. 6 angedeutet, in der gestreckten Stellung der Elemente 101, 102 die Motorspindel 20 samt Fräser 21 um die Werkzeugachse WA1=WA2 drehen. Diese Drehbewegung ist durch den Pfeil P1 dargestellt.

In einer anderen Ausführungsform ist eine Verdrehmöglichkeit im Bereich der Aufnahmevorrichtung 120 oder an der Welle 22 der Motorspindel 20 vorgesehen.

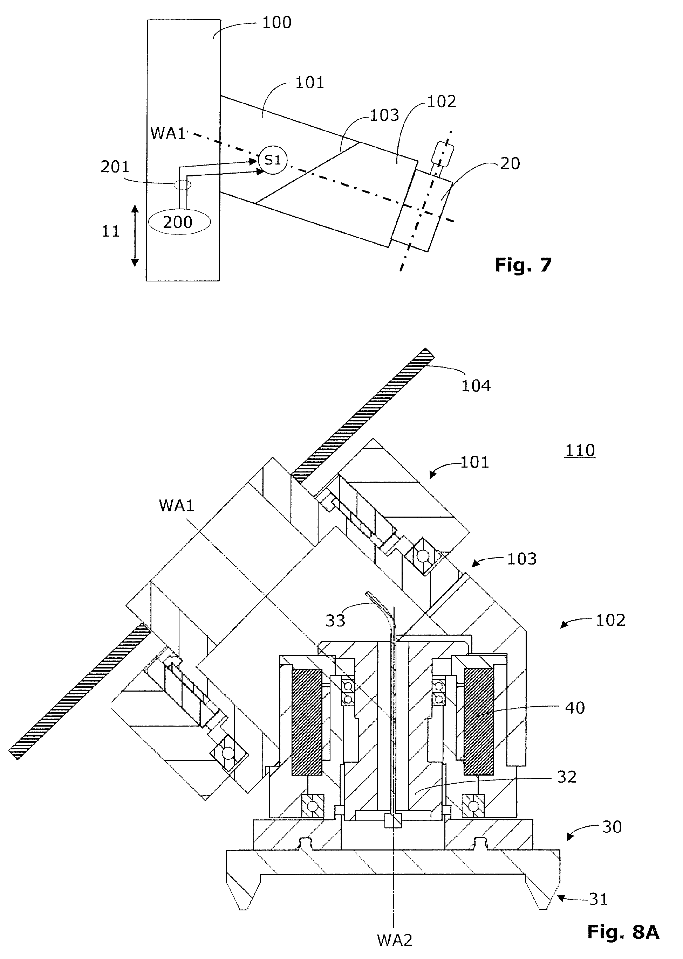

In einer besonders bevorzugten Ausführungsform ist ein Stellantrieb S1 im oder am Werkzeugkopf 110 vorgesehen, wie in Fig. 7 angedeutet. Dieser Stellantrieb S1 des Werkzeugkopfs 110 ist so von der Maschine 100 aus ansteuerbar (in Fig. 7 durch zwei Pfeile 201 angedeutet, die von der NC-Steuerung 200 ausgehen), dass mit einer Stellbewegung das zweite Element 102 in Bezug auf das erste Element 101 in eine gewünschte Winkelposition versetzt (gedreht/gekippt/geschwenkt) werden kann. Die automatische Verstellbarkeit, die durch einen solchen Stellantrieb S1 ermöglicht wird, erlaubt es die Maschine 100 in automatische Bearbeitungsabläufe einzubinden. Die Stellbewegung kann entweder vor einer Bearbeitung eines Werkstücks oder kontinuierlich während der Bearbeitung erfolgen.

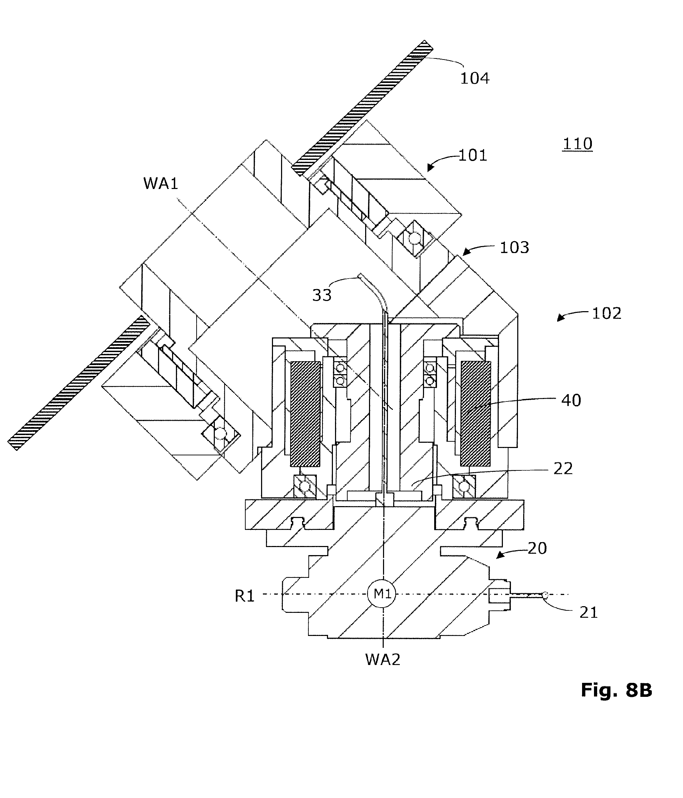

In den Figuren 8A und 8B sind Details einer weiteren Ausführungsform gezeigt. In Fig. 8A ist der Werkzeugkopf 110 mit einem Fräswerkzeug 30 bestückt, dessen Welle 32 sich ins Innere des zweiten Elements 102 erstreckt. In Fig. 8A sind Details der ensprechenden Aufnahmevorrichtung 120 zu erkennen ohne dass hier im Einzelnen darauf eingegangen wird. Innerhalb der Welle 32 sind eine Energiezufuhr 33 und ein Koppelmechanismus für z.B. die anzuflanschende Motorspindel 20 enthalten. Im Bereich des zweiten Elements 102 können zum Beispiel die Wicklungen 40 des Antriebs A1 angeordnet sein. Der Antrieb A1 kann aber auch (falls er nicht direkt im Bereich der Welle 32 angeordnet ist) im Kopplungsbereich 103 oder sogar im ersten Element 101 oder in der Maschine 100 sitzen. Je nach Position des Antriebs A1 kann er mittels einer starren Welle (z.B. Welle 106 in Fig. 4A) und/oder einem Getriebe oder mittels einer flexiblen Welle und/oder einer Kardanwelle antriebstechnisch mit dem Fräswerkzeug 30 verbunden sein.

In Fig. 8A ist eine Konstellation gezeigt, bei welcher die Seitenfläche 104 der Maschine 100 schräg steht. So kann das Fräswerkzeug 30 zum Beispiel in einer hängenden Position (wie in Fig. 8A gezeigt) ein Werkstück bearbeiten, das unterhalb des Werkzeugkopfes 110 plan auf einem Tisch aufliegt.

In Fig. 8B ist der Werkzeugkopf 110 mit einer Motorspindel 20 samt Fräser 21 bestückt. Die Energiezufuhr 33 der Motorspindel 20 erstreckt sich ins Innere des zweiten Elements 102. In Fig. 8B sind Details der ensprechenden Aufnahmevorrichtung 120 zu erkennen ohne dass hier im Einzelnen darauf eingegangen wird. Die Zusatzachse R1 steht senkrecht zur Werkzeugachse WA2, kann jedoch auch in jedem anderen Winkel angeordnet werden. Je nach Ausführungsform kann die Motorspindel 20 um die Werkzeugachse WA2 gedreht werden oder der Werkzeugkopf 110 kann um die Werkzeugachse WA1 gedreht werden, wie bereits beschrieben. Der Antrieb A1 kann bei der Bearbeitung eines Werkstücks zum Einsatz kommen wenn die Motorspindel 20 eingesetzt wird, wobei der Antrieb A1 dann als Positionierantrieb dient. Der Antrieb A1 kann aber optional verwendet werden, um die Motorspindel 20 um die Werkzeugachse WA2 zu drehen.

In Fig. 9 ist eine weitere Ausführungsform gezeigt. Die Elemente sind im Wesentlichen wieder dieselben und werden daher nicht erneut beschrieben. Hier wurde aber ein Flansch 50 aufgesetzt. Dieser Flansch 50 umfasst eine Zentralbohrung 51 zum Aufnehmen eines Werkzeugs (z.B. eines Bohrwerkzeuges).

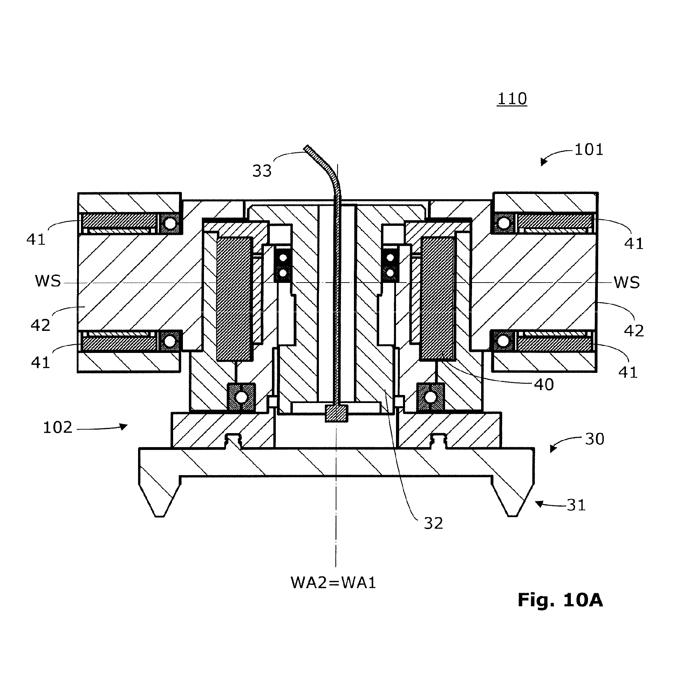

In Fig. 10A ist eine weitere Ausführungsform gezeigt. Die Elemente sind im Wesentlichen wieder dieselben und werden daher nicht erneut beschrieben. Es handelt sich um einen Werkzeugkopf 110 mit Gabelkopf, wobei der Gabelkopf eine Schwenkachse WS aufweist um die das zweite Element 102 gekippt oder geschwenkt werden kann. Zwei Wellenstümpfe 42 des zweiten Elements 102 sitzen in Bohrungen des ersten Elements 101. Im Bereich der Bohrungen sind z.B. die Wicklungen und Magnete (zusammen als 41 bezeichnet) von zwei Direktantrieben angeordnet, die es ermöglichen die Schwenk- oder Kippbewegung des zweiten Elements 102 um die Schwenkachse WS auszuführen. Bei der Schwenkachse WS handelt es sich um eine sogenannte NC-Positionierachse, die dazu ausgelegt ist Positionierbewegungen vor oder während dem Bearbeiten eines Werkstücks auszuführen.

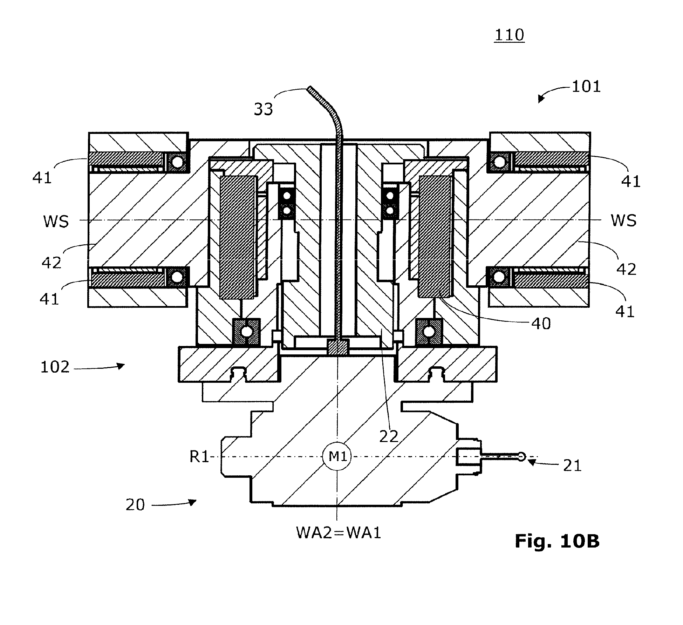

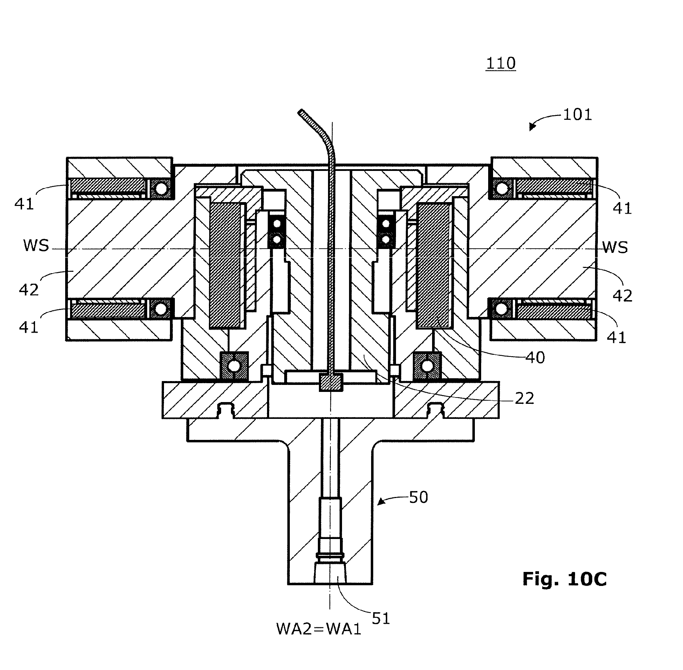

FIG. 10B zeigt eine Schnittansicht des Werkzeugkopfs 110 nach Fig. 10A in einer gestreckten Stellung, wobei der Werkzeugkopf 110 eine Motorspindel 20 trägt. Die Motorspindel 20 umfasst wiederrum einen Motor M1, wie in Fig. 10B angedeutet, um die Rotation des Werkzeugs 21 um die Zusatzachse R1 zu ermöglichen. FIG. 10C zeigt eine Schnittansicht des Werkzeugkopfs 110 nach Fig. 10A in einer gestreckten Stellung, wobei der Werkzeugkopf 110 einen Flansch 50 trägt. Die Elemente sind im Wesentlichen wieder dieselben und werden daher nicht erneut beschrieben.

Der Wechsel zwischen Fräswerkzeug 30 und Motorspindel 20 kann automatisch erfolgen. In diesem Fall ist die Aufnahmevorrichtung 120 zur automatisierten Bedienung ausgelegt.

Vorzugsweise sind der erste Antrieb A1 und die Aufnahmevorrichtung 120 für Drehmomentkräfte dimensioniert, die grösser sind als 1500 Nm, um im 1. Fall den Antrieb A1 als Antrieb des 30 z.B. zum Kegelradfräsen einsetzen zu können.

Die verschiedenen Ausführungsformen können problemlos miteinander kombiniert werden, um weitere Konstellationen zu ermöglichen.

Der Werkzeugkopf 110 dient als intelligente (elektro-mechanische, hydraulisch-mechanische ode pneumatisch-mechanische) Schnittstelle der Maschine 100 und kann eine mehrachsige Maschine 100 flexibler einsetzbar machen. Durch das Anbringen der Motorspindel 20 mit integriertem Motor M1 ist die Maschine 100 um eine weitere NC-Achse erweiterbar. So kann aus einer optimierten Spezialmaschine 100 (z.B. einer Kegelradverzahnmaschine) ein universell einsetzbares Bearbeitungszentrum werden.
optimierten Spezialmaschine 100 (z.B. Kegelradverzahnmaschine) ein universell einsetzbares Bearbeitungszemtrum werden.

| | |
|---|---|
| Verstellbewegung | 11 |
| | |
| Motorspindel | 20 |
| Werkzeug / Fräser | 21 |
| Welle | 22 |
| Stromanschlüsse | 23 |
| Maschinenseitige Stromanschlüsse | 24 |
| Fräswerkzeug | 30 |
| Werkzeug- oder Bearbeitungsseite | 31 |
| Spindel oder Welle | 32 |
| Energiezufuhr | 33 |
| Wicklung | 40 |
| Direktantrieb | 41 |
| Wellenstümpfe | 42 |
| Flansch | 50 |
| | |
| mehrachsige Maschine | 100 |
| Erstes Element oder erste Baugruppe | 101 |
| zweites Element oder zweite Baugruppe | 102 |
| Kopplung | 103 |
| Schrägflächen | 103.1, 103.2 |
| Vertikalfläche oder Seitenfläche | 104 |
| Spindelkörper | 105 |
| antriebstechnische Verbindung | 106 |
| Stirnseite | 107 |
| Werkzeugkopf | 110 |
| Übergangsbereich | 111 |
| | |
| Anschlussmittel | 121 |
| | |
| NC-Steuerung | 200 |
| Steuerleitungen | 201 |
| | |
| (Haupt-)Antrieb (maschinenseitig) | A1 |
| Pfeil | P1 |
| Zusatzachse | R1 |
| Rotationsachse | R2 |
| Motor | M1 |
| Stellantrieb | S1 |
| Neigungswinkel | W1 |
| Winkel | W |
| Schwenkachse | WS |
| Werkzeugachsen | WA1, WA2 |

## Patentansprüche

1. Werkzeugkopf (110) zur Verwendung in einer mehrachsigen Maschine (100), wobei der Werkzeugkopf (110) umfasst:
- einen Spindelkörper (105), der zwei Elemente (101, 102) umfasst, die über eine korrespondierene Kopplung (103) drehbar miteinander verbunden sind, wobei das erste Element (101) der beiden Elemente (101, 102) eine erste Längsachse (WA1) und das zweite Element (102) der beiden Elemente (101, 102) eine zweite Längsachse (WA2) aufweisen, die je nach Drehstellung von einer konzentrischen Lage in eine abgewinkelte Lage überführbar sind,
- einen ersten Antrieb (A1), der in oder an dem Spindelkörper (105) sitzt,
- eine Aufnahmevorrichtung (120), die an dem zweiten Element (102) angeordnet ist, wobei diese Aufnahmevorrichtung (120)
- zum Befestigen einer Motorspindel (20) ausgelegt ist, wobei ein Motor (M1), der in die Motorspindel (20) integriert ist, über das zweite Element (102) und Anschlussmittel (121) der Aufnahmevorrichtung (120) mit Energie versorgbar ist,
- zum Befestigen eines Fräswerkzeugs (30) ausgelegt ist, wobei das Fräswerkzeug (30) mittels des ersten Antriebs (A1) antreibbar ist.

2. Werkzeugkopf (110) nach Anspruch 1, **dadurch gekennzeichnet, dass** die korrespondierene Kopplung (103) in Form einer gelenkartigen Verbindung ausgelegt ist.

3. Werkzeugkopf (110) nach Anspruch 1 oder 2, **dadurch gekennzeichnet, dass** die korrespondierene Kopplung (103) mittles zweier Schrägflächen (103.1, 103.2) realisiert ist, die gegeneinander verdrehbar sind.

4. Werkzeugkopf (110) nach Anspruch 1, 2 oder 3, **dadurch gekennzeichnet, dass** der erste Antrieb (A1) und die Aufnahmevorrichtung (120) für Drehmomentkräfte dimensioniert sind, die grösser als 1500 Nm sind.

5. Werkzeugkopf (110) nach Anspruch 2, **dadurch gekennzeichnet, dass** die gelenkartigen Verbindung mittels eines Gabelkopfes realisiert ist, der eine Schwenk- oder Kippbewegung um eine Schwenkachse (WS) ermöglicht.

6. Werkzeugkopf (110) nach einem der vorhergehenden Ansprüche, **dadurch gekennzeichnet, dass** über die Anschlussmittel (121) eine Steuerverbindung zu einer NC-Steuerung (200) der Maschine (100) herstellbar ist.

7. Werkzeugkopf (110) nach einem der vorhergehenden Ansprüche 1 bis 5, **dadurch gekennzeichnet, dass** die Aufnahmevorrichtung (120) eine Stromspeisungsverbindung (121, 23) umfasst, damit der Motor (M1) der Motorspindel (20) maschinenseitig durch das zweite Element (102) hindurch mit Strom versorgbar ist.

8. Werkzeugkopf (110) nach einem der vorhergehenden Ansprüche 1 bis 4, **dadurch gekennzeichnet, dass** die Aufnahmevorrichtung (120) eine Energiespeisungsverbindung umfasst, damit der Motor (M1) der Motorspindel (20) maschinenseitig durch das zweite Element (102) hindurch mit hydraulischer oder pneumatischer Energie als Antrieb für die Motospindel (20) versorgbar ist.

9. Maschine (100) zum Bearbeiten von Werkstücken, **dadurch gekennzeichnet, dass** die Maschine (100) umfasst:
- mehrere numerisch gesteuerte Achsen,
- eine NC-Steuerung (200) zum kontrollierten Bewegen der Achsen,
- einen Werkzeugkopf (110), der einen Spindelkörper (105) mit zwei Elementen (101, 102) umfasst, die über eine korrespondierene Kopplung (103) drehbar miteinander verbunden sind, wobei das erste Element (101) der beiden Elemente (101, 102) eine erste Längsachse (WA1) und das zweite Element (102) der beiden Elemente (101, 102) eine zweite Längsachse (WA2) aufweisen, die je nach Drehstellung von einer konzentrischen Lage in eine abgewinkelte Lage überführbar sind,
- einen ersten Antrieb (A1), der in oder an dem Spindelkörper (105) sitzt,
- eine Aufnahmevorrichtung (120), die an dem zweiten Element (102) angeordnet ist, wobei diese Aufnahmevorrichtung (120)
- zum Befestigen einer Motorspindel (20) ausgelegt ist, wobei ein Motor (M1), der in die Motorspindel (20) integriert ist, über das zweite Element (102) und Anschlussmittel (121) der Aufnahmevorrichtung (120) von der Maschine (100) aus mit Energie versorgbar ist,
- zum Befestigen eines Fräswerkzeugs (30) ausgelegt ist, wobei das Fräswerkzeug (30) mittels des ersten Antriebs (A1) antreibbar ist.

10. Maschine (100) nach Anspruch 9, **dadurch gekennzeichnet, dass** die Maschine (100) mindestens einen Schieber (11) oder Schlitten umfasst, der eine Verschiebung des Werkzeugkopfs (110) in Bezug auf ein Werkstück ermöglicht.

11. Maschine (100) nach Anspruch 9 oder 10, **dadurch gekennzeichnet, dass** durch das Anbringen des Werkzeugkopfs (110) mit der Motorspindel (20) mit dem integrierten Motor (M1) die Maschine (100) um eine weitere Achse erweiterbar ist.

12. Maschine (100) nach Anspruch 9, 10 oder 11, **dadurch gekennzeichnet, dass** die korrespondierene Kopplung (103) als gelenkartigen Verbindung mittels eines Gabelkopfes realisiert ist, wobei der Gabelkopf eine Schwenk- oder Kippbewegung um eine Schwenkachse (WS) ermöglicht.

13. Verwendung einer Maschine (100) gemäss einem der Ansprüche 9 bis 12, **dadurch gekennzeichnet, dass** folgende Schritte ausgeführt werden:
- Anbringen eines Fräswerkzeugs (30) an dem Werkzeugkopf (110),
- Ansteuern eines Stellantriebs (S1) des Werkzeugkopfs (110), um mit einer Stellbewegung das zweite Element (102) in Bezug auf das erste Element (101) in eine gewünschte Winkelposition (W) zu versetzen,
- Ansteuern des ersten Antriebs (A1) mittles einer NC-Steuerung (200) der Maschine (100), um das Fräswerkzeug (30) in eine Rotationsbewegung um die zweite Längsachse (WA2) zu versetzen,
- Ansteuern anderer Achsen der Maschine (100) mittles der NC-Steuerung (200), um eine Bearbeitungsbewegung relativ zu einem Werkstück auszuführen.

14. Verwendung einer Maschine (100) gemäss Anspruch 13, **dadurch gekennzeichnet, dass** folgende Schritte ausgeführt werden:
- Abnehmen des Fräswerkzeugs (30),
- Anbringen einer Motorspindel (20) an dem Werkzeugkopf (110), wobei eine Verbindung mit der Maschine (100) hergestellt wird, um den Motor (M1), der in die Motorspindel (20) integriert ist, über das zweite Element (102) mit Energie versorgen zu können,
- Ansteuern des Stellantriebs (S1) des Werkzeugkopfs (110), um mit einer Stellbewegung das zweite Element (102) in Bezug auf das erste Element (101) in eine gewünschte Winkelposition (W) zu versetzen,
- Ansteuern des Motors (M1), um einen Fräser (21) der Motorspindel (20) in eine Rotationsbewegung um eine Zusatzachse (R1) zu versezten,
- Ansteuern anderer Achsen der Maschine (100) mittles der NC-Steuerung (200), um eine Bearbeitungsbewegung relativ zu einem Werkstück auszuführen.

15. Verwendung einer Maschine (100) gemäss Anspruch 14, **dadurch gekennzeichnet, dass** zusätzlich unter Einsatz des Stellantriebs (S1) eine kontinuierliche Veränderung des Drehwinkels (W) zwischen dem zweiten Element (102) und der Motorspindel (20) durchgeführt wird.

16. Verwendung einer Maschine (100) gemäss Anspruch 13, **dadurch gekennzeichnet, dass** das Fräswerkzeug (30) zur Hartbearbeitung eines Zahnrads, vorzugsweise eines Kegelrads, eingesetzt wird.

17. Verwendung einer Maschine (100) gemäss Anspruch 14 oder 15, **dadurch gekennzeichnet, dass** der Fräser (21) der Motorspindel (20) zur Weichbearbeitung eines Zahnrads, vorzugsweise eines Kegelrads, eingesetzt wird.
